# EUROPEAN PATENT APPLICATION

(11) **EP 3 043 120 A1**
(43) Date of publication of application: **13.07.2016**
(21) Application number: 16150759.5
(22) Date of filing: 11.01.2016
(51) Int. Cl.: F24F 12/00, F24F 1/02, F24F 3/14

(54) **VENTILATION APPARATUS**

(30) Priority: 12.01.2015 KR 20150004411
(71) Applicant: LG Electronics Inc., Seoul 07336 (KR)
(72) Inventor: KWAK, Taehee, 08592 Seoul (KR); HA, Doyong, 08592 Seoul (KR); RYU, Myongsok, 08592 Seoul (KR); CHOI, Jaeheuk, 08592 Seoul (KR)
(74) Representative: Vossius & Partner Patentanwälte Rechtsanwälte mbB

(57) **Abstract**

A ventilation apparatus includes a casing having the inside partitioned into a first floor and a second floor. A first sharing duct is formed in the first floor and configured to suck one of indoor air and outdoor air and to have the sucked air horizontally moved. A second sharing duct is formed in the second floor and configured to suck the other of indoor air and outdoor air and to have the sucked air horizontally moved. First and second heat exchangers are disposed in the first and second sharing ducts, respectively The ventilation apparatus is advantageous in that air resistance is minimized, horizontally moving air is subject to heat exchange with the entire area of the heat exchanger, and efficiency of heat exchange between air and the heat exchanger is improved because air is divided into the first floor and the second floor and horizontally moved.

## Description

### CROSS-REFERENCE TO RELATED APPLICATION

This application claims the benefit under 35 U.S.C. § 119(a) to Patent Application No. 10-2015-0004411, filed in the Republic of Korea on January 12, 2015, the entire contents of which are hereby incorporated by reference.

### BACKGROUND OF THE INVENTION

### Field of the Invention

The present invention relates to a ventilation apparatus.

### Discussion of the Related Art

In general, a ventilation apparatus refers to an apparatus configured to discharge contaminated indoor air, suck in fresh and clean outdoor air, and supply the fresh and clean outdoor air to the indoors.

An air-conditioner not having a ventilation function cools or heats indoor air while circulating the indoor air.

In this case, the air-conditioner to which outdoor air is not introduced filters the indoor air through a filter, etc. If air-conditioning is performed using only the indoor air, however, the quality of the indoor air is gradually reduced.

For this reason, examples in which a ventilation apparatus capable of sucking an outdoor air and discharging an indoor air is installed and a combination of an air-conditioner and ventilation apparatus capable of heating and cooling is installed have recently increased.

### SUMMARY OF THE INVENTION

An object of the present invention is to provide a ventilation apparatus in which an outdoor air duct and an indoor air duct are simply formed.

Another object of the present invention is to provide a ventilation apparatus capable of increasing a contact area with air that flows in a limited space.

Yet another object of the present invention is to provide a ventilation apparatus in which the movement resistance of air is small.

Further yet another object of the present invention is to provide a ventilation apparatus capable of reducing power consumption by minimizing a height difference of the movement of the air.

A ventilation apparatus in accordance with an aspect of the present invention includes a casing configured to have a first sharing duct formed in a first floor and to have a second sharing duct formed in a second floor; an indoor suction chamber formed in the casing, connected to the first sharing duct and the second sharing duct, and configured to suck an indoor air; an indoor discharge chamber formed in the casing, connected to the first sharing duct and the second sharing duct, and configured to discharge air indoors; an outdoor suction chamber formed in the casing, connected to the first sharing duct and the second sharing duct, and configured to suck an outdoor air; an outdoor discharge chamber formed in the casing, connected to the first sharing duct and the second sharing duct, and configured to discharge air outdoors; a first heat exchanger disposed in the first sharing duct; a second heat exchanger disposed in the second sharing duct; an indoor suction damper disposed in the indoor suction chamber and configured to selectively open or close any one of the first sharing duct and the second sharing duct; an indoor discharge damper disposed in the indoor discharge chamber and configured to selectively open or close any one of the first sharing duct and the second sharing duct; an outdoor suction damper disposed in the outdoor suction chamber and configured to selectively open or close any one of the first sharing duct and the second sharing duct; and an outdoor discharge damper disposed in the outdoor discharge chamber and configured to selectively open or close any one of the first sharing duct and the second sharing duct.

A ventilation apparatus in accordance with another aspect of the present invention includes a casing configured to have the inside partitioned into a first floor and a second floor, a first sharing duct formed in the first floor and configured to suck one of an indoor air and an outdoor air and to have the sucked air horizontally moved, a second sharing duct formed in the second floor and configured to suck the other of an indoor air and an outdoor air and to have the sucked air horizontally moved, a first heat exchanger disposed in the first sharing duct, and a second heat exchanger disposed in the second sharing duct.

The ventilation apparatus in accordance with an embodiment of the present invention is advantageous in that the resistance of air can be minimized because air is divided into the first floor and the second floor and horizontally moved.

Furthermore, the ventilation apparatus in accordance with an embodiment of the present invention is advantageous in that efficiency of heat exchange between the heat exchanger and air can be improved because horizontally moved air is uniformly subject to heat exchange with the entire area of the heat exchanger.

Furthermore, the ventilation apparatus in accordance with an embodiment of the present invention is advantageous in that the velocity of discharged air is constant because air is horizontally moved with the up and down movements of the air being minimized.

### Brief Description of the Drawings

FIG. 1 is a perspective view illustrating a ventilation apparatus in accordance with a first embodiment of the present invention;
FIG. 2 is a plan view of FIG. 1;
FIG. 3 is an exemplary diagram illustrating that the duct structure of the ventilation apparatus illustrated in FIG. 1 is divided into a first floor and a second floor in order to describe the duct structure;
FIG. 4 is a first exemplary diagram illustrating that the ventilation apparatus in accordance with the first embodiment of the present invention is driven in ventilation mode;
FIG. 5 is a second exemplary diagram illustrating that the ventilation apparatus in accordance with the first embodiment of the present invention is driven in ventilation mode;
FIG. 6 is a first exemplary diagram illustrating that the ventilation apparatus in accordance with the first embodiment of the present invention is driven in circulation mode;
FIG. 7 is a second exemplary diagram illustrating that the ventilation apparatus in accordance with the first embodiment of the present invention is driven in circulation mode;
FIG. 8 is an exemplary diagram illustrating that the duct structure of a ventilation apparatus in accordance with a second embodiment of the present invention is divided into the first floor and the second floor in order to describe the duct structure;
FIG. 9 is an exemplary diagram illustrating that the duct structure of a ventilation apparatus in accordance with a third embodiment of the present invention is divided into the first floor and the second floor in order to describe the duct structure; and
FIG. 10 is an exemplary diagram illustrating that the duct structure of a ventilation apparatus in accordance with a fourth embodiment of the present invention is divided into the first floor and the second floor in order to describe the duct structure.

### DETAILED DESCRIPTION OF THE EMBODIMENTS

Hereinafter, embodiments of the present invention are described in detail with reference to the accompanying drawings.

Furthermore, in describing the present invention, a detailed description of a known function or element related to the present invention will be omitted if it is deemed to make the gist of the present invention unnecessarily vague. It is to be noted that the same terms may be assigned different reference numerals although they are indicative of different parts.

Furthermore, terms described herein have been adopted by taking into consideration functions in the present invention and may be changed depending on an intention or practice of a user, such as a person who performs experiments or measurement. Accordingly, the terms should be defined based on the overall contents of this specification.

In this specification, terms, such as the first and the second, may be used to describe various elements, but the elements should not be restricted by the terms. The terms are used to only distinguish one element and the other element from each other. For example, a first element may be named a second element without departing from the scope of the present invention. Likewise, a second element may be named a first element. The term "and/or" includes a combination of a plurality of related and described items or any one of a plurality of related and described items.

The terms used in this application are used to only describe specific embodiments and are not intended to restrict the present invention. An expression of the singular number includes an expression of the plural number unless clearly defined otherwise in the context.

All terms used herein, unless defined otherwise, have the same meanings as those typically understood by those having ordinary skill in the art. The terms, such as ones defined in common dictionaries, should be interpreted to have the same meanings as terms in the context of pertinent technology, and should not be interpreted to have ideal or excessively formal meanings unless clearly defined in the specification.

Furthermore, unless explicitly described to the contrary, the word "comprise" and variations, such as "comprises" or "comprising", will be understood to imply the inclusion of stated elements but not the exclusion of any other elements.

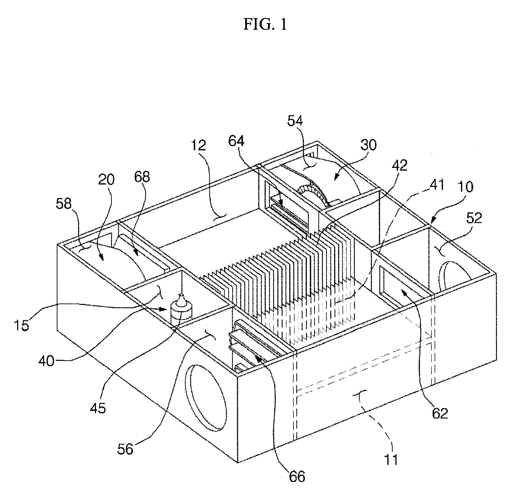

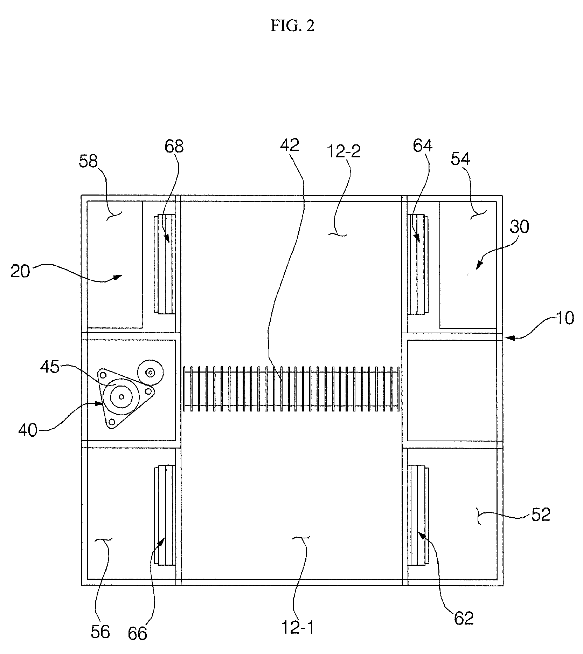

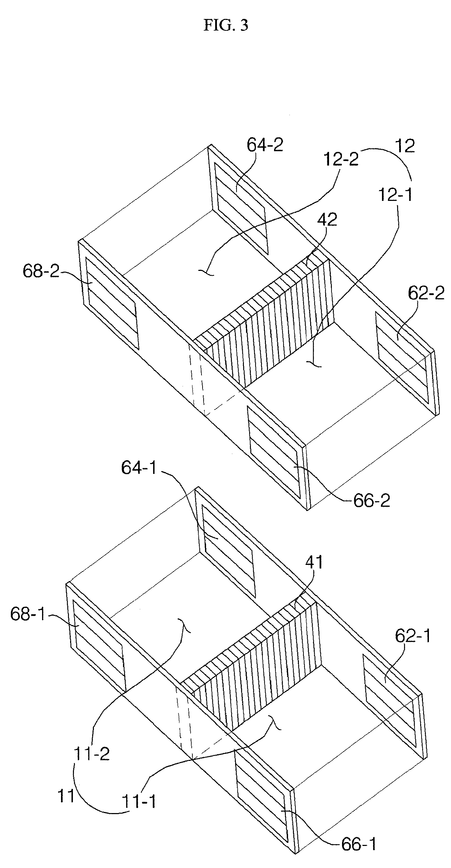

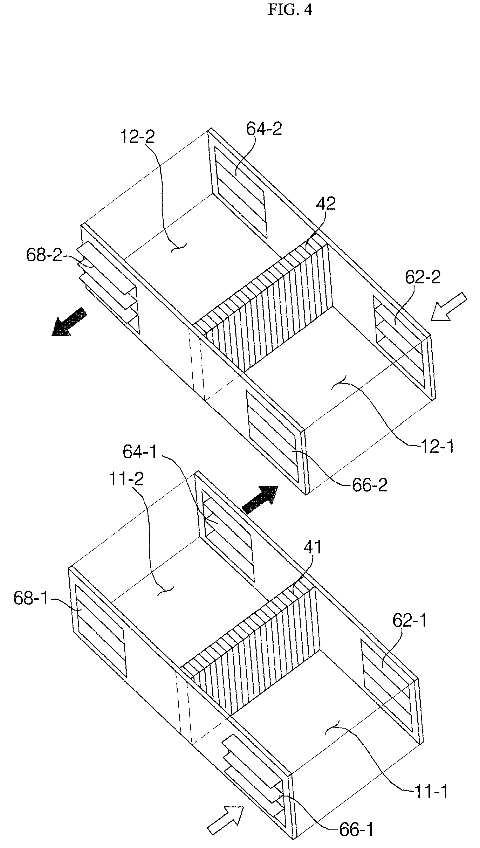

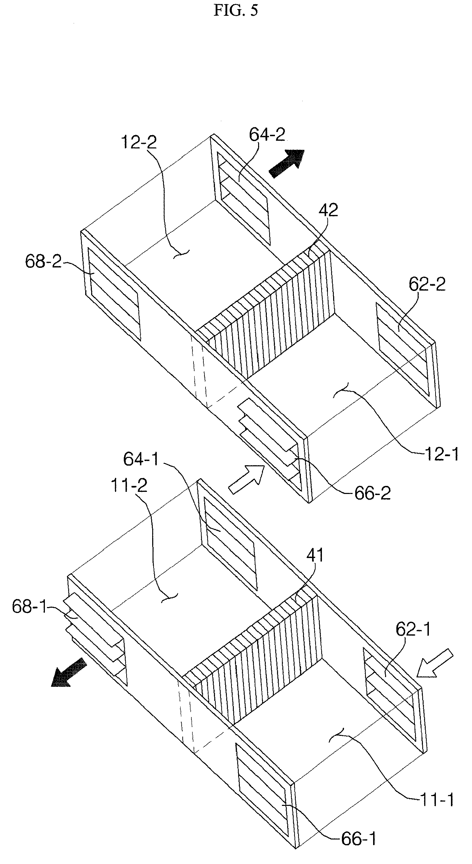

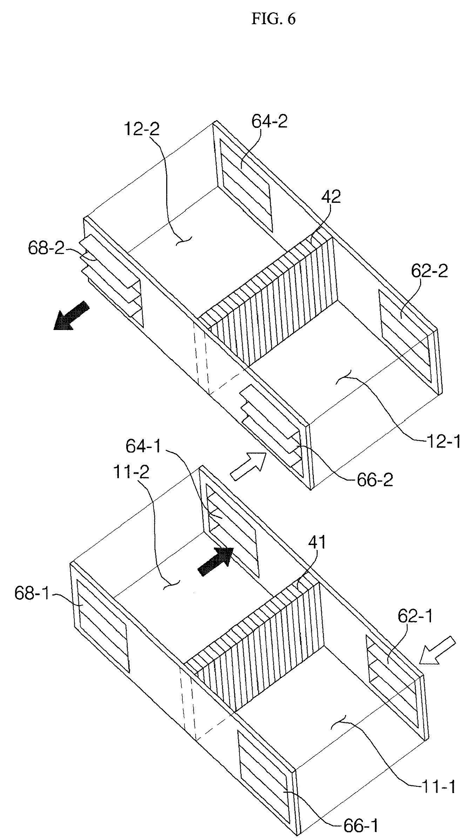

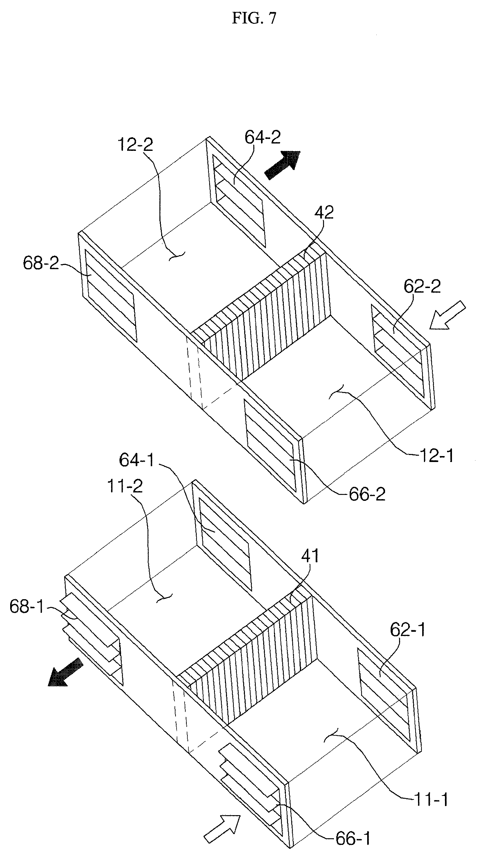

FIG. 1 is a perspective view illustrating a ventilation apparatus in accordance with a first embodiment of the present invention, FIG. 2 is a plan view of FIG. 1, FIG. 3 is an exemplary diagram illustrating that the duct structure of the ventilation apparatus illustrated in FIG. 1 is divided into a first floor and a second floor in order to describe the duct structure, FIG. 4 is a first exemplary diagram illustrating that the ventilation apparatus in accordance with the first embodiment of the present invention is driven in ventilation mode, FIG. 5 is a second exemplary diagram illustrating that the ventilation apparatus in accordance with the first embodiment of the present invention is driven in ventilation mode, FIG. 6 is a first exemplary diagram illustrating that the ventilation apparatus in accordance with the first embodiment of the present invention is driven in circulation mode, and FIG. 7 is a second exemplary diagram illustrating that the ventilation apparatus in accordance with the first embodiment of the present invention is driven in circulation mode.

Referring to FIGS. 1 to 7, the ventilation apparatus according to the present embodiment includes a casing 10, an outdoor discharge fan 20 installed in the casing 10 and configured to discharge air to the outside, an indoor discharge fan 30 installed in the casing 10 and configured to discharge air to the inside, and an air-conditioning unit 40 installed in the casing 10 and configured to perform air-conditioning on moved air.

The casing 10 includes a first sharing duct 11 configured to have an indoor air or an outdoor air move therein, a second sharing duct 12 configured to have an indoor air or an outdoor air move therein and stacked on the first sharing duct 11, an indoor suction chamber 52 connected to the first sharing duct 11 and the second sharing duct 12 and configured to suck an indoor air, an indoor discharge chamber 54 connected to the first sharing duct 11 and the second sharing duct 12 and configured to discharge air to the inside, an outdoor suction chamber 56 connected to the first sharing duct 11 and the second sharing duct 12 and configured to suck an outdoor air, and an outdoor discharge chamber 58 connected to the first sharing duct 11 and the second sharing duct 12 and configured to discharge air to the outside.

An indoor suction damper 62, an indoor discharge damper 64, an outdoor suction damper 66, and an outdoor discharge damper 68 configured to control the movement of air to and from the first sharing duct 11 or the second sharing duct 12 are disposed in the indoor suction chamber 52, the indoor discharge chamber 54, the outdoor suction chamber 56, and the outdoor discharge chamber 58, respectively.

The air-conditioning unit 40 is configured to include a compressor 45, a first heat exchanger 41, a second heat exchanger 42, an expansion valve (not illustrated), and a 4-way refrigerant switching valve (not illustrated).

The air-conditioning unit 40 is a heat pump that may be driven in a cooling cycle and a heating cycle. Accordingly, if the first heat exchanger 41 operates as a condenser in response to the switching of the refrigerant switching valve, the second heat exchanger 42 operates as an evaporator. If the first heat exchanger 41 operates as an evaporator in response to the switching of the refrigerant switching valve, the second heat exchanger 42 operates as a condenser.

The operation mechanism of the air-conditioning unit 40 is known to those skilled in the art, and thus a detailed description thereof is omitted.

In the present embodiment, the first heat exchanger 41 is disposed in the first sharing duct 11, and the second heat exchanger 42 is disposed in the second sharing duct 12.

The first and second heat exchangers 41, 42 are disposed to cross the first and second sharing ducts 11, 12. Accordingly, the first and second heat exchangers 41, 42 partition the first and second sharing ducts 11, 12 into a suction side and a discharge side.

The first heat exchanger 41 and its supporting structure extend from one side wall of the first sharing duct 11 to the opposing side wall of the first sharing duct 11 to form a wall between the suction side and the discharge side of the first sharing duct 11. In this way, a room for receiving air is provided at the suction side in the first sharing duct 11 and next to one side of the heat exchanger 41, and a room for receiving air is provided at the discharge side in the first sharing duct 11 and next to the other side of the heat exchanger 41.

Similarly, the second heat exchanger 42 and its supporting structure extend from one side wall of the second sharing duct 12 to the opposing side wall of the second sharing duct 12 to form a wall between the suction side and the discharge side of the second sharing duct 12. In this way, a room for receiving air is provided at the suction side in the second sharing duct 12 and next to one side of the heat exchanger 42, and a room for receiving air is provided at the discharge side in the second sharing duct 12 and next to the other side of the heat exchanger 42.

The suction side is a duct connected to the indoor suction chamber 52 and the outdoor suction chamber 56, and the discharge side is a duct connected to the indoor discharge chamber 54 and the outdoor discharge chamber 58.

Furthermore, air that moves from the suction side of the first sharing duct 11 or second sharing duct 12 to the discharge side is subject to heat exchange while passing through the first heat exchanger 41 or the second heat exchanger 42.

When air is subject to heat exchange with the first and second heat exchangers 41, 42, air moves horizontally while maintaining a same level, and the moved air is uniformly subject to heat exchange with the entire area of the first and second heat exchangers 41, 42.

Furthermore, a desiccant coating capable of absorbing moisture in the air is formed on a surface of the first and second heat exchangers 41, 42.

The desiccant coating is a material capable of absorbing moisture in the air and discharging absorbed air into the air when heat is applied to the material. The material is commonly used by those skilled in the art, and thus a detailed description thereof is omitted.

In the present embodiment, the first and second heat exchangers 41, 42 are alternately used as a condenser or evaporator depending on a cycle. If one of the first and second heat exchangers 41, 42 is used as the evaporator, it absorbs moisture. If one of the first and second heat exchangers 41, 42 is used as the condenser, it discharges absorbed moisture into the air.

The compressor 45 is disposed in a separate machine room 15 formed in the casing 10.

The indoor suction damper 62, the indoor discharge damper 64, the outdoor suction damper 66, and the outdoor discharge damper 68 have the same structure and selectively open or close the first sharing duct 11 or the second sharing duct 12.

The indoor suction damper 62, the indoor discharge damper 64, the outdoor suction damper 66, and the outdoor discharge damper 68 may be fabricated to have various structures. In the present embodiment, they are configured to open or close the duct through a shutter method.

For example, the indoor suction damper 62 may selectively open or close at least one of the first and the second sharing ducts 11 and 12. When the indoor suction damper 62 is open in response to a control signal, an indoor air may move to at least one of the first sharing duct 11 and the second sharing duct 12 through the indoor suction chamber 52.

In the present embodiment, dampers connected to the first sharing duct 11 are defined as a first indoor suction damper 62-1, a first indoor discharge damper 64-1, a first outdoor suction damper 66-1, and a first outdoor discharge damper 68-1. Dampers connected to the second sharing duct 12 are defined as a second indoor suction damper 62-2, a second indoor discharge damper 64-2, a second outdoor suction damper 66-2, and a second outdoor discharge damper 68-2.

Furthermore, a location that belongs to the casing 10 and where the first sharing duct 11 is placed is defined as the first floor, and a location that belongs to the casing 10 and where the second sharing duct 12 is placed is called the second floor.

The indoor suction chamber 52, the indoor discharge chamber 54, the outdoor suction chamber 66, and the outdoor discharge chamber 68 may be partitioned and formed into the first floor and the second floor. In the present embodiment, however, the indoor suction chamber 52, the indoor discharge chamber 54, the outdoor suction chamber 66, and the outdoor discharge chamber 68 are formed to share the first floor and the second floor.

Furthermore, in the present embodiment, the outdoor discharge fan 20 is disposed in the outdoor discharge chamber 58, and the indoor discharge fan 30 is disposed in the indoor discharge chamber 54.

An operation of the ventilation apparatus in accordance with the first embodiment of the present invention is described in detail below with reference to related drawings.

### Ventilation mode

In ventilation mode, some of an indoor air is discharged to the outside, and fresh air is sucked from the outside and supplied to the inside.

In this case, in the ventilation apparatus according to the present embodiment, while the ducts in the first floor and the second floor are alternately open and closed, an outdoor air is supplied to the inside, and an indoor air is discharged to the outside.

For example, a case where an outdoor air is supplied to the inside through the first floor and an indoor air is discharged to the outside through the second floor is described below (refer to FIG. 4).

First, in order to supply the outdoor air to the inside, the first outdoor suction damper 66-1 and the first indoor discharge damper 64-1 disposed in the first floor are open, and the remaining dampers disposed in the first floor are closed.

Furthermore, in order to discharge the indoor air to the outside, the second indoor suction damper 62-2 and the second outdoor discharge damper 68-2 disposed in the second floor are open, and the remaining dampers disposed in the second floor are closed.

In this case, the outdoor discharge fan 20 and the indoor discharge fan 30 are respectively driven to move air in the second floor and the first floor.

In such a case, the outdoor air is supplied to the inside through the first floor, and the indoor air is discharged to the outside through the second floor.

In this case, the state of the first and second heat exchangers 41, 42 disposed in the first and second floors may be changed from a condenser or evaporator state to an evaporator or condenser state. In such a case, the first and second floors reverse the direction of a movement.

If the function of the first and second heat exchangers 41, 42 is alternated, the indoor air is discharged through the first floor, and the outdoor air is supplied through the second floor (refer to FIG. 5).

Accordingly, in order to discharge the indoor air through the first floor, the first indoor suction damper 62-1 and the first outdoor discharge damper 68-1 are open, and the remaining dampers are closed.

Furthermore, in order to supply the outdoor air through the second floor, the second outdoor suction damper 66-2 and the second indoor discharge damper 64-2 are open, and the remaining dampers are closed.

If ducts are configured by controlling the dampers as in FIG. 4 or 5, air moving from the outside to the inside and air moving from the inside to the outside horizontally move through different layers and uniformly come in contact with the entire area of the first heat exchanger 41 or the second heat exchanger 42, thereby being capable of being subject to heat exchange.

In particular, if air is subject to heat exchange while moving through the first sharing duct 11 and the second sharing duct 12 that are horizontally disposed as in the present embodiment, there are advantages in that the resistance of the moving air can be minimized and the velocity of the air can be regularly maintained.

Furthermore, a vortex formed in moving air can be minimized because the first sharing duct 11 and the second sharing duct 12 are formed in a straight line.

For example, if air moves while forming a difference of altitude, air that moves from the upper side to the lower side has a faster velocity than air that moves from the lower side to the upper side. Accordingly, there is a difference of a flux between air that is sucked to the inside and discharged air. If air sucked to the inside and discharged air move in the same layer as in the present embodiment, there are advantages in that a difference of a flux between the suction side and the discharge side can be minimized and resistance occurring while the air moves can be minimized.

### Circulation mode

In circulation mode, dampers are controlled so that an indoor air is sucked and discharged to the inside.

First, a case where an indoor air is circulated in the first floor and an outdoor air is circulated in the second floor is described below with reference to FIG. 6.

If the indoor air is circulated in the first floor, the first indoor suction damper 62-1 and the first outdoor discharge damper 64-1 are open and the remaining dampers are closed.

If the outdoor air is circulated in the second floor, the second outdoor suction damper 66-2 and the second outdoor discharge damper 68-2 are open and the remaining dampers are closed.

In this case, the outdoor discharge fan 20 discharges the air in the second floor to the outside, and the indoor discharge fan 30 circulates the indoor air.

Furthermore, the outdoor discharge fan 20 may not operate or intermittently operate depending on an operating condition, such as an external temperature.

Next, a case where an indoor air is circulated in the second floor and an outdoor air is circulated in the first floor is described below with reference to FIG. 7.

If an outdoor air is circulated in the first floor, the first outdoor suction damper 66-1 and the first outdoor discharge damper 68-1 are open and the remaining dampers are closed.

If an indoor air is circulated in the second floor, the second indoor suction damper 62-2 and the second indoor discharge damper 64-2 are open and the remaining dampers are closed.

In this case, the outdoor discharge fan 20 discharges the air in the first floor to the outside, and the indoor discharge fan 30 circulates the indoor air.

### Dehumidification and humidification

In the ventilation apparatus according to the present embodiment, a desiccant coating capable of absorbing moisture is provided on the first heat exchanger 41 and the second heat exchanger 42. Accordingly, when the ventilation apparatus is driven in ventilation mode or circulation mode, the inside can be dehumidified or humidified depending on a user's choice.

When a user selects dehumidification, the control unit (not illustrated) of the ventilation apparatus may drive a heat exchanger, disposed in the duct of air discharged to the inside, as an evaporator and remove moisture in the air by performing heat exchange on the evaporator and air supplied to the inside.

For example, in ventilation mode, the control unit may perform dehumidification on air that is supplied from the outside and discharged to the inside. In circulation mode, the control unit may perform dehumidification on air that is sucked from the inside and discharged to the inside.

Furthermore, when a user selects humidification, the control unit drives a heat exchanger, disposed on the duct of air discharged to the inside, as a condenser and discharges moisture into the air by performing heat exchange on the condenser and air supplied to the inside.

In this case, the first and second heat exchangers 41, 42 alternately operate as the evaporator or condenser and absorb moisture from the air or discharge moisture into the air. The control unit calculates the amount of moisture accumulated in the first and second heat exchangers 41,42 by detecting a temperature and humidity in moving air.

Accordingly, if dehumidification or humidification is performed, the ventilation apparatus according to the present embodiment determines that any one of the first heat exchanger 41 and the second heat exchanger 42 will be used as a condenser or an evaporator by changing the 4-way valve of the air-conditioning unit 40.

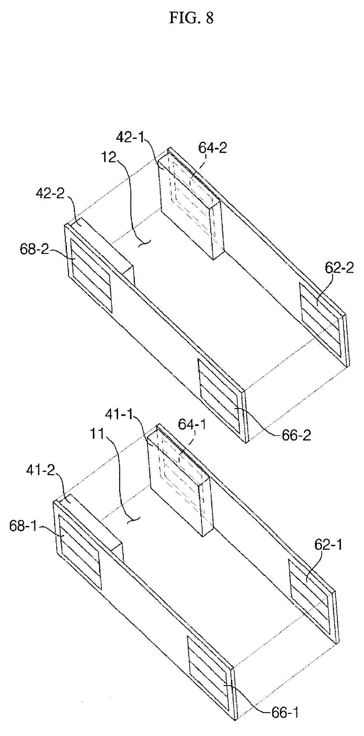

FIG. 8 is an exemplary diagram illustrating that the duct structure of a ventilation apparatus in accordance with a second embodiment of the present invention is divided into the first floor and the second floor in order to describe the duct structure.

The ventilation apparatus according to the present embodiment includes a plurality of heat exchangers disposed in a single layer, unlike in the first embodiment.

More specifically, the ventilation apparatus according to the present embodiment may include two first heat exchangers 41-1 and 41-2. One (e.g., 41-1) of the two first heat exchangers is installed close to the first indoor discharge damper 64-1, and the other (e.g., 41-2) of the two first heat exchangers is installed close to the first outdoor discharge damper 68-1.

Furthermore, one (e.g., 42-1) of two second heat exchangers is installed close to the second indoor discharge damper 64-2, and the other (e.g., 42-2) of the two second heat exchangers is installed close to the second outdoor discharge damper 68-2.

In this case, the first and second heat exchangers may include at least two heat exchangers separated from each other. Accordingly, there is an advantage in that the heat exchangers can be optimized for and installed in the duct of air.

In the present embodiment, the first and second heat exchangers are installed close to the discharge side and are disposed so that air is subject to heat exchange before it is discharged to the inside or outside. Accordingly, the first and second heat exchanger can be configured so that air is subject to heat exchange through a rapid flux at a location close to the outdoor discharge fan 20 or the indoor discharge fan 30.

Unlike in the present embodiment, the plurality of heat exchangers may be installed on the suction side. In some embodiments, some of the plurality of heat exchangers may be installed on the suction side, and the remaining heat exchangers may be installed on the discharge side. Those skilled in the art may dispose such heat exchangers in various forms depending on an installation structure or duct structure of the ventilation apparatus.

The remaining elements are the same as those of the first embodiment, and thus a detailed description thereof is omitted.

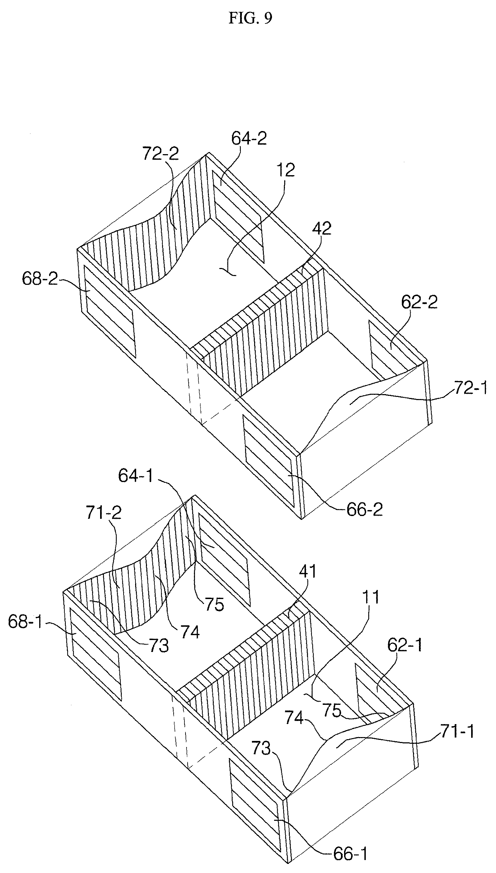

FIG. 9 is an exemplary diagram illustrating that the duct structure of a ventilation apparatus in accordance with a third embodiment of the present invention is divided into the first floor and the second floor in order to describe the duct structure.

The ventilation apparatus according to the present embodiment may further include a guide configured to guide the flow of air and installed in at least one of the first sharing duct 11 and the second sharing duct 12.

In the present embodiment, the guide may include a first suction guide 71-1 and a first discharge guide 71-2 installed in the first sharing duct 11 and a second suction guide 72-1 and a second discharge guide 72-2 installed in the second sharing duct 12.

In this case, the first suction guide 71-1 is configured to guide sucked air to the first heat exchanger 41, and the second suction guide 72-1 is configured to guide sucked air to the second heat exchanger 42.

Furthermore, the first discharge guide 71-2 is configured to guide air, passing through the first heat exchanger 41, to the exit, and the second discharge guide 72-2 is configured to guide air, passing through the second heat exchanger 42, to the exit.

In the present embodiment, the suction guides 71-1 and 72-1 and the discharge guides 71-2 and 72-2 have the same shape, and thus the first suction guide 71-1 is described as an example.

The first suction guide 71-1 may include one end 73, the other end 75, and a middle part 74.

The one end 73, the other end 75, and the middle part 74 are configured to have a curved surface.

The first suction guide 71-1 is generally curved in a bow shape, and the middle part 74 is placed closer to the heat exchanger 41, 42.

That is, the middle part 74 is more protruded than the one end 73 and the other end 75.

Accordingly, in the first suction guide 71-1, the middle part 74 guides air that passes through the first outdoor suction damper 66-1 or the first indoor suction damper 62-1 so that the flow of the air switches to the first heat exchanger 41.

In the first discharge guide 71-2, the middle part 74 guides air, passing through the first heat exchanger 41, to the first outdoor discharge damper 68-1 or the first indoor discharge damper 64-1.

In this case, the suction guide or the discharge guide changes the direction of flowing air and can minimize resistance of air that is generated in this process. The suction guide - 71-1, 72-1 and the discharge guide 71-2, 72-2 have streamline shapes by taking the direction of a flow into consideration and can minimize the generation of a turbulent flow in the first sharing duct 11 or the second sharing duct 12.

In some embodiments, the suction guide or the discharge guide may have a flat surface not a curved surface or may have a triangle in a flat cross section.

The remaining elements are the same as those of the first embodiment, and thus a detailed description thereof is omitted.

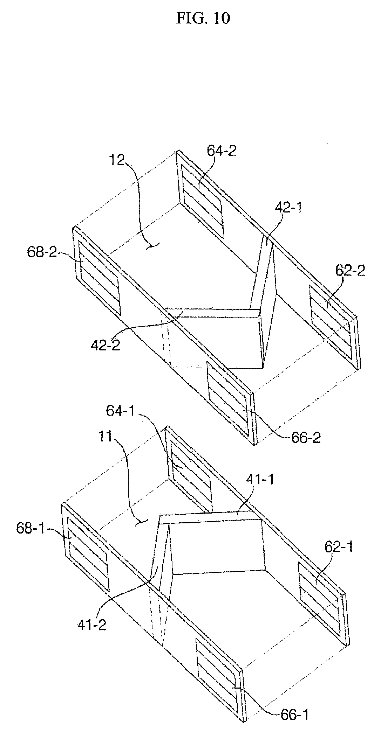

FIG. 10 is an exemplary diagram illustrating that the duct structure of a ventilation apparatus in accordance with a fourth embodiment of the present invention is divided into the first floor and the second floor in order to describe the duct structure.

Unlike in the first embodiment, the ventilation apparatus according to the present embodiment increases an area brought in contact with the same air by changing the shape of the first heat exchanger or the second heat exchanger.

In the present embodiment, a first heat exchanger includes a first heat exchange unit 41-1 and a second heat exchange unit 41-2. The first heat exchange unit 41-1 and the second heat exchange unit 41-2 are assembled to cross each other and protruded toward the inlet side or the exit side.

Like the first heat exchanger, the second heat exchanger includes a first heat exchange unit 42-1 and a second heat exchange unit 42-2.

Referring to FIG. 10, at least one of the first heat exchanger and the second heat exchanger may have a "<" or ">" form. In this case, there is an advantage in that an area coming in contact with air is increased because the length of the heat exchanger is increased.

Furthermore, the velocity of a moving fluid is the fastest in the middle part of a duct and the slowest in the edge part of the duct due to air resistance. If the heat exchanger is configured to have the "<" or ">" form by taking into consideration the velocity of a moving fluid, the velocities of a moving fluid in the middle and edge parts may become uniform.

The remaining elements are the same as those of the first embodiment, and thus a detailed description thereof is omitted.

Although some exemplary embodiments of the present invention have been described with reference to the accompanying drawings, the present invention is not limited to the embodiments, but may be manufactured in various, different forms. Those skilled in the art to which the present invention pertains will appreciate that the present invention may be implemented in other detailed forms without changing the technical spirit or essential characteristics of the present invention. Accordingly, it should be understood that the aforementioned embodiments are not limitative, but are illustrative from all aspects.

## Claims

1. A ventilation apparatus, comprising:
a casing having an inside partitioned into a first floor and a second floor;
a first sharing duct provided in the first floor;
a second sharing duct provided in the second floor;
a first heat exchanger located in the first sharing duct, the first heat exchanger forming a permeable wall that partitions the first sharing duct into a first entering airflow chamber and a first exit airflow chamber; and
a second heat exchanger located in the second sharing duct, the second heat exchanger forming a permeable wall that partitions the second sharing duct into a second entering airflow chamber and a second exit airflow chamber,
wherein a main flow direction of air through the first heat exchanger is non-parallel to a main flow direction of air entering the first entering airflow chamber, and
wherein a main flow direction of air through the second heat exchanger is non-parallel to a main flow direction of air entering the second entering airflow chamber.

2. The ventilation apparatus of claim 1, wherein the main flow direction of air through the first heat exchanger is perpendicular to the main flow direction of air entering the first entering airflow chamber, and
wherein the main flow direction of air through the second heat exchanger is perpendicular to the main flow direction of air entering the second entering airflow chamber.

3. The ventilation apparatus of claim 1 or 2, wherein the first entering airflow chamber is configured to receive a first one of an indoor air and an outdoor air, and
wherein the second entering airflow chamber is configured to receive a second one of an indoor air and an outdoor air.

4. The ventilation apparatus of any one of claims 1 to 3, wherein the main flow direction of air through the first heat exchanger is horizontal, and
wherein the main flow direction of air through the second heat exchanger is horizontal.

5. The ventilation apparatus of any one of claims 1 to 4, further comprising:
an indoor suction chamber connected to the first entering airflow chamber and the second entering airflow chamber, the indoor suction chamber configured to receive indoor air,
an indoor discharge chamber connected to the first exit airflow chamber and the second exit airflow chamber, the indoor discharge chamber configured to discharge air indoors,
an outdoor suction chamber connected to the first entering airflow chamber and the second entering airflow chamber, the outdoor suction chamber configured to receive outdoor air, and
an outdoor discharge chamber connected to the first exit airflow chamber and the second exit airflow chamber, the outdoor discharge chamber configured to discharge air outdoors.

6. The ventilation apparatus of claim 5, wherein an indoor discharge fan is located in at least one of the indoor suction chamber and the indoor discharge chamber, and
wherein an outdoor discharge fan is located in at least one of the outdoor suction chamber and the outdoor discharge chamber,
wherein preferably the indoor discharge fan is located in the indoor discharge chamber, and wherein the outdoor discharge fan is located in the outdoor discharge chamber.

7. The ventilation apparatus of claim 5 or 6, further comprising:
an indoor suction damper disposed in the indoor suction chamber and configured to selectively open or close any one of the first sharing duct and the second sharing duct;
an indoor discharge damper disposed in the indoor discharge chamber and configured to selectively open or close any one of the first sharing duct and the second sharing duct;
an outdoor suction damper disposed in the outdoor suction chamber and configured to selectively open or close any one of the first sharing duct and the second sharing duct; and
an outdoor discharge damper disposed in the outdoor discharge chamber and configured to selectively open or close any one of the first sharing duct and the second sharing duct.

8. The ventilation apparatus of claim 7, wherein the indoor suction damper comprises:
a first indoor suction damper configured to open or close the first sharing duct; and
a second indoor suction damper configured to open or close the second sharing duct, and/or
wherein the outdoor suction damper comprises:
a first outdoor suction damper configured to open or close the first sharing duct; and
a second outdoor suction damper configured to open or close the second sharing duct.

9. The ventilation apparatus of claim 7 or 8, wherein the indoor discharge damper comprises:
a first indoor discharge damper configured to open or close the first sharing duct; and
a second indoor discharge damper configured to open or close the second sharing duct, and/or
wherein the outdoor discharge damper comprises:
a first outdoor discharge damper configured to open or close the first sharing duct; and
a second outdoor discharge damper configured to open or close the second sharing duct.

10. The ventilation apparatus of any one of claims 5 to 9, wherein the first entering airflow chamber is located between the indoor suction chamber and the outdoor suction chamber, and
wherein the first exit airflow chamber is located between the indoor discharge chamber and the outdoor discharge chamber.

11. The ventilation apparatus of any one of claims 1 to 10, wherein at least one of the first heat exchanger and the second heat exchanger comprises a first heat exchanger portion and a second heat exchanger portion, the first heat exchanger portion being angularly oriented with respect to the second heat exchanger portion,
wherein preferably the first heat exchanger portion and the second heat exchanger portion form a `V' shape.

12. The ventilation apparatus of any one of claims 1 to 11, wherein the first entering airflow chamber includes a first suction air guide therein configured to redirect a flow of air entering the first entering airflow chamber toward the first heat exchanger,
wherein preferably the first exit airflow chamber includes a first discharge air guide therein configured to redirect a flow of air exiting the first heat exchanger toward an exit of the first exit airflow chamber.

13. A ventilation apparatus, comprising:
a casing having an inside partitioned into a first floor and a second floor;
a first sharing duct provided in the first floor;
a second sharing duct provided in the second floor;
a first heat exchanger located in the first sharing duct that partitions the first sharing duct into a first entering airflow chamber and a first exit airflow chamber;
a second heat exchanger located in the second sharing duct that partitions the second sharing duct into a second entering airflow chamber and a second exit airflow chamber; and
a first suction air guide located in the first entering airflow chamber and configured to redirect a flow of air entering the first entering airflow chamber toward the first heat exchanger.

14. The ventilation apparatus of claim 13, further comprising:
a first discharge air guide located in the first exit airflow chamber and configured to redirect a flow of air exiting the first heat exchanger toward an exit of the first exit airflow chamber.

15. The ventilation apparatus of claim 13 or 14, wherein:
the first suction guide comprise a first end, a second end, and a middle part,
the middle part is disposed between the first end and the second end, and
the middle part is placed closer to the first heat exchanger compared to the first end and the second end,
wherein preferably a surface between the first end portion and the intermediate portion is curved, and
wherein a surface between the second end portion and the intermediate portion is curved.

16. A ventilation apparatus, comprising:
a casing partitioned into a first floor and a second floor;
a first sharing duct formed in the first floor;
a second sharing duct formed in the second floor;
a first heat exchanger placed in the first sharing duct and configured to have an absorption layer for absorbing moisture formed in the first heat exchanger and to divide the first sharing duct into a first inlet chamber and a first exit chamber; and
a second heat exchanger placed in the second sharing duct and configured to have an absorption layer for absorbing moisture formed in the second heat exchanger and to divide the second sharing duct into a second inlet chamber and a second exit chamber,
wherein a main flow direction of air passing through the first heat exchanger intersects a main flow direction of air entering the first inlet chamber,
a main flow direction of air passing through the second heat exchanger intersects a main flow direction of air entering the second inlet chamber,
an indoor suction chamber is connected to the first inlet chamber and the second inlet chamber and configured to be supplied with indoor air,
an outdoor discharge chamber is connected to the first exit chamber and the second exit chamber and configured to discharge indoor air,
an outdoor suction chamber is connected to the first inlet chamber and the second inlet chamber and configured to be supplied with indoor air,
an outdoor discharge chamber is connected to the first exit chamber and the second exit chamber configured to be discharge indoor air,
an indoor suction damper is disposed in the indoor suction chamber and configured to selectively open and close any one of the first sharing duct and the second sharing duct,
an indoor discharge damper is disposed in the indoor discharge chamber and configured to selectively open and close any one of the first sharing duct and the second sharing duct,
an outdoor suction damper is disposed in the outdoor suction chamber and configured to selectively open and close any one of the first sharing duct and the second sharing duct,
an outdoor discharge damper is disposed in the outdoor discharge chamber and configured to selectively open and close any one of the first sharing duct and the second sharing duct,
a suction guide is disposed in at least one of the first inlet chamber and the second inlet chamber and configured to change a flow of introduced air, and
a discharge guide is discharged in at least one of the first exit chamber and the second exit chamber and configured to change a flow of air passing through the first heat exchanger or the second heat exchanger.
